# EUROPEAN PATENT APPLICATION

(11) **EP 4 711 391 A1**
(43) Date of publication of application: **18.03.2026**
(21) Application number: 25181075.0
(22) Date of filing: 05.06.2025
(51) Int. Cl.: C08F 222/10, H01M 10/052, H01M 10/0565, H01M 4/134, H01M 4/38, H01M 4/485, H01M 4/505, H01M 4/525, H01M 4/58, H01M 4/583, H01M 4/587

(54) **SEMI-SOLID BATTERY ELECTROLYTE PRECURSOR, SEMI-SOLID BATTERY ELECTROLYTE, SEMI-SOLID BATTERY, AND PREPARATION METHOD OF THE SAME**

(30) Priority: 12.09.2024 CN 202411281744
(71) Applicant: Eve Energy Co., Ltd., Huizhou, Guangdong 516006 (CN)
(72) Inventor: WANG, Tao, Huizhou, Guangdong, 516006 (CN); CHEN, Guiwei, Huizhou, Guangdong, 516006 (CN); JI, Yajuan, Huizhou, Guangdong, 516006 (CN); ZHAO, Ruirui, Huizhou, Guangdong, 516006 (CN)
(74) Representative: Herrero & Asociados, S.L.

(57) **Abstract**

A semi-solid battery electrolyte precursor, a semi-solid battery electrolyte, a semi-solid battery, and a preparation method of the semi-solid battery are provided. The semi-solid battery electrolyte precursor includes a first polymer monomer, a second polymer monomer, and an initiator. The first polymer monomer is an acrylic acid monomer or an acrylate monomer. The second polymer monomer is a fluorine-containing unsaturated monomer.

## Description

### TECHNICAL FIELD

The present disclosure relates the technical field of battery materials, and in particular to a semi-solid battery electrolyte precursor, a semi-solid battery electrolyte, a semi-solid battery, and a preparation method of the semi-solid battery.

### BACKGROUND

Lithium-ion batteries are widely used in electronic products and electric vehicles. Although significant achievements have been made in high-energy-density battery systems, issues such as electrolyte leakage and battery short circuits remain major safety hazards, severely hindering further development of lithium-ion batteries. When internal or external short circuits occur, undesirable exothermic reactions may lead to a rapid rise in internal temperature and thermal runaway.

Solid-state batteries have been proposed to improve and replace traditional liquid electrolytes, fundamentally addressing safety concerns. In all-solid-state batteries, thermally stable solid polymer electrolytes or inorganic solid electrolytes are used instead of liquid electrolytes, thereby helping to avoid electrolyte leakage and combustion or explosion.

Battery packs are an important component of new energy technologies, providing energy and power to electrical devices. Currently, battery packs on the market generally consist of a plurality of cells combined in series and/or parallel, equipped with single-cell monitoring and thermal management devices.

### SUMMARY

### Technical Problem

However, all-solid-state batteries still face issues such as poor contact between the electrolyte and electrodes, as well as a lack of scalable preparation technologies. To address these challenges of the all-solid-state batteries, constructing semi-solid batteries through in-situ polymerization technology is considered one of the most promising solutions for improving safety performance of lithium-ion batteries. Gel electrolytes combine advantages of liquid electrolytes and solid polymer electrolytes, offering good ionic conductivity and interfacial compatibility. Inside the lithium-ion batteries, gel electrolytes can regulate a uniform distribution of lithium-ion flow, suppress electrolyte decomposition reactions, and improve electrode stability and battery safety. Semi-solid batteries prepared using the gel electrolytes balance high safety and high energy density, showing great development potential compared to traditional liquid batteries.

In-situ polymerization is a method for preparing the semi-solid batteries. Due to compatibility with related battery preparation processes, the in-situ polymerization can achieve mass production without significant changes to a process, making the in-situ polymerization highly promising for development. However, semi-solid batteries prepared via the in-situ polymerization often exhibit higher DCIR (Direct Current Internal Resistance) compared to liquid systems due to difficulties in controlling monomer polymerization degrees and residual initiators causing excessive interfacial side reactions and difficult to be applied in practice. Processes in related art typically involve preparing a precursor solution, injecting the precursor solution, forming a battery, and then curing at a high temperature, which leads to polymerization monomers participating in SEI (Solid Electrolyte Interphase) formation during the forming stage, resulting in a high-impedance interface. Process optimizations, such as high-temperature curing after injecting and before forming, have been attempted, but initial DCIR remains high, mainly because unsaturated bond-containing film-forming additives are consumed during the high-temperature curing stage, and incomplete monomer polymerization leaves residues that may participate in SEI formation during the forming stage, further increasing the DCIR. Some reported improvements involve a two-step injection process to reduce DCIR in gel semi-solid batteries: the first injection introduces a liquid electrolyte for forming, followed by a second injection of a precursor solution containing the electrolyte, monomers, and initiators, reducing the DCIR of the cells to some extent, while increasing process complexity and time costs.

### Technical Solution

**In** a first aspect, the present disclosure provides a semi-solid battery electrolyte precursor. The semi-solid battery electrolyte precursor includes a first polymer monomer, a second polymer monomer, and an initiator. The first polymer monomer is an acrylic acid monomer or an acrylate monomer. The second polymer monomer is a fluorine-containing unsaturated monomer.

**In** a second aspect, the present disclosure provides a semi-solid battery electrolyte. The semi-solid battery electrolyte is obtained by in-situ polymerization of the semi-solid battery electrolyte precursor described in the first aspect.

**In** a third aspect, the present disclosure provides a preparation method of a semi-solid battery. The preparation method includes injecting the semi-solid battery electrolyte precursor as described in the first aspect into a battery cell for in-situ polymerization.

**In** a fourth aspect, the present disclosure provides a semi-solid battery. The semi-solid battery is prepared by the preparation method as described in the third aspect or includes the semi-solid battery electrolyte as described in the second aspect.

### Beneficial Effects

The beneficial effects of the present disclosure are as follows. The semi-solid battery electrolyte precursor includes the first polymer monomer with an acrylic acid structure or an acrylate structure and the second polymer monomer with a fluorine-containing unsaturated structure. A resulting copolymer can improve stability of an electrode/electrolyte interface. Even if monomer residues exist, a highly stable SEI film can be formed during a subsequent film-forming stage, optimizing the electrode/electrolyte interface. Additionally, the semi-solid battery electrolyte precursor is compatible with a wide range of monomer types, allowing for a design of different electrolyte systems based on battery requirements. A subsequent preparation process for semi-solid batteries is simple, significantly reducing the DCIR while improving battery production efficiency, making the semi-solid battery highly feasible for large-scale applications.

### DETAILED DESCRIPTION

**As** analyzed in the background of the present disclosure, the related art faces issues such as unstable interface performance and high battery impedance in semi-solid batteries. To address these issues, the present disclosure provides a semi-solid battery electrolyte precursor, a semi-solid battery electrolyte, a semi-solid battery, and a preparation method of the semi-solid battery.

**In** some embodiments of the present disclosure, a semi-solid battery electrolyte precursor is provided. The semi-solid battery electrolyte precursor includes a first polymer monomer, a second polymer monomer, and an initiator. The first polymer monomer is an acrylic acid monomer or an acrylate monomer. The second polymer monomer is a fluorine-containing unsaturated monomer.

**The** semi-solid battery electrolyte precursor includes the first polymer monomer with an acrylic acid structure or an acrylate structure and the second polymer monomer with a fluorine-containing unsaturated structure. A resulting copolymer can improve stability of an electrode/electrolyte interface. Even if monomer residues exist, a highly stable SEI film can be formed during a subsequent film-forming stage, optimizing the electrode/electrolyte interface. Additionally, the semi-solid battery electrolyte precursor is compatible with a wide range of monomer types, allowing for a design of different electrolyte systems based on battery requirements. A subsequent preparation process for semi-solid batteries is simple, significantly reducing the DCIR while improving the battery production efficiency, making the semi-solid battery highly feasible for large-scale applications.

The acrylic acid monomer refers to acrylic acid or a compound where a vinyl hydrogen of acrylic acid replaced by a hydrocarbon group, such as acrylic acid, methacrylic acid, 2-ethylacrylic acid, 2-propylacrylic acid, butenoic acid, 3,3-dimethylacrylic acid, etc., but is not limiting.

The acrylate monomer refers to an ester monomer corresponding to the acrylic acid monomer described above, such as a methyl ester, ethyl ester, propyl ester, butyl ester, 1,3-butanediol ester, pentaerythritol ester, etc. of the acrylic acid monomer, but is not limiting. Especially when the first polymer monomer includes the acrylate monomer, the copolymer formed with the fluorine-containing unsaturated monomer can further improve the stability of the electrode/electrolyte interface, reduce the DCIR, and enhance the performance of the semi-solid battery.

**In** some embodiments, the first polymer monomer includes at least one selected from the group consisting of acrylic acid, methacrylic acid, methyl methacrylate, butyl acrylate, 1,3-butanediol diacrylate, pentaerythritol tetraacrylate, ethoxylated trimethylolpropane triacrylate, trimethylolpropane trimethacrylate, and pentaerythritol triacrylate. The first polymer monomer is widely available and can better function in the semi-solid battery electrolyte precursor, which can reduce battery DCIR.

**In** some embodiments of the present disclosure, the first polymer monomer includes at least one selected from the group consisting of methyl methacrylate, butyl acrylate, 1,3-butanediol diacrylate, pentaerythritol tetraacrylate, ethoxylated trimethylolpropane triacrylate, trimethylolpropane trimethacrylate, and pentaerythritol triacrylate, which can further reduce battery internal resistance and improve cycling performance.

In some embodiments of the present disclosure, the second polymer monomer includes at least one selected from the group consisting of 2,2,2-trifluoroethyl methacrylate, 2,2,3,3-tetrafluoropropyl methacrylate, 2,2,3,3,3-pentafluoropropyl methacrylate, and 1,1,1,3,3,3-hexafluoroisopropyl methacrylate, which facilitate polymerization with the first polymer monomer, and the resulting copolymer with the first polymer monomer significantly improves the interface stability and reduces the DCIR, further enhancing the battery performance.

The initiator can be any compound capable of initiating a polymerization of the first polymer monomer and second polymer monomer, and can be selected from the related art without special requirements. Examples include, but are not limited to, at least one selected from the group consisting of azobisisobutyronitrile, 2,2'-azobis-(2,4-dimethylvaleronitrile), benzoyl, dicumyl peroxide, dibenzoyl peroxide, potassium persulfate, and ammonium persulfate.

To better utilize the first polymer monomer and the second polymer monomer in the semi-solid battery electrolyte precursor, in some embodiments of the present disclosure, a mass ratio of the first polymer monomer to the second polymer monomer is in a range of 3:1-1:1, particularly in a range of 3:1-2:1.

In some embodiments of the present disclosure, a mass of the initiator is 0.5 wt%-2 wt% of a total mass of the first polymer monomer and the second polymer monomer. When applied to battery preparation, the polymer monomers have an appropriate polymerization rate, further improving the battery performance.

In addition to the first polymer monomer, the second polymer monomer, and the initiator, the semi-solid electrolyte precursor of the present disclosure may further include conventional electrolyte components such as a lithium salt and a solvent.

A specific type of the lithium salt or the solvent can be selected from the related art without special restrictions. In some embodiments of the present disclosure, the lithium salt includes at least one selected from the group consisting of lithium hexafluorophosphate (LiPF6), lithium tetrafluoroborate (LiBF4), lithium trifluoromethanesulfonate (LiCF3SO3), lithium bis(trifluoromethanesulfonyl)imide (LiTFSI), lithium bis(fluorosulfonyl)imide (LiFSI), lithium difluoro(oxalato)borate (LiODFB), lithium perchlorate (LiClO4), and lithium bis(oxalato)borate (LiBOB). In some embodiments of the present disclosure, the solvent includes at least one selected from the group consisting of propylene carbonate (PC), ethylene carbonate (EC), ethyl methyl carbonate (EMC), dimethyl carbonate (DMC), diethyl carbonate (DEC), dimethoxyethane (DME), and ethyl propionate (EP).

**In** some embodiments of the present disclosure, to further improve the battery performance and enhance a role of the copolymer in stabilizing the interface, a mass of the first polymer monomer ranges from 0.5 wt% to 5 wt% of a total mass of the semi-solid battery electrolyte precursor, and a mass of the second polymer monomer ranges from 0.5 wt% to 2.5 wt% of the total mass of the semi-solid battery electrolyte precursor. For example, the mass of the first polymer monomer may be 0.5 wt%, 1 wt%, 1.2 wt%, 1.5 wt%, 1.8 wt%, 2 wt%, 2.2 wt%, 2.5 wt%, 2.8 wt%, 3 wt%, 3.2 wt%, 3.5 wt%, 3.8 wt%, 4 wt%, 4.2 wt%, 4.5 wt%, 4.7 wt%, or 5 wt% of the total mass of the semi-solid battery electrolyte precursor. Similarly, the mass of the second polymer monomer may be 0.5 wt%, 0.7 wt%, 1 wt%, 1.2 wt%, 1.5 wt%, 1.8 wt%, 2 wt%, 2.2 wt%, or 2.5 wt% of the total mass of the semi-solid battery electrolyte precursor.

**In** some embodiments of the present disclosure, the total mass of the first polymer monomer and the second polymer monomer ranges from 1.5% to 3% of the total mass of the semi-solid battery electrolyte precursor. For example, the total mass of the first polymer monomer and the second polymer monomer may be 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, or 3% of the total mass of the semi-solid battery electrolyte precursor.

**In** some embodiments of the present disclosure, the mass of the first polymer monomer ranges from 0.5 wt% to 5 wt% of the total mass of the semi-solid battery electrolyte precursor, the mass of the second polymer monomer ranges from 0.5 wt% to 2.5 wt% of the total mass of the semi-solid battery electrolyte precursor, and the mass ratio of the first polymer monomer to the second polymer monomer is in the range of 3:1-1:1, particularly in the range of 3:1-2:1. The mass of the initiator ranges from 0.5 wt% to 2 wt% of the total mass of the first polymer monomer and the second polymer monomer. In this way, an electrolyte containing a fluorine-containing copolymer and formed by the semi-solid battery electrolyte precursor exhibits excellent comprehensive performance, and the semi-solid battery containing the electrolyte has a stable electrode/electrolyte interface with low DCIR.

The semi-solid battery electrolyte precursor may also include an additive. Type and amount of the additive can be referenced from the related art, and those skilled in the art can incorporate the additive into the semi-solid battery electrolyte precursor based on the type and amount of the additive in the electrolyte of the related art. The present disclosure will not elaborate further.

**In** some embodiments of the present disclosure, a semi-solid battery electrolyte is provided. The semi-solid battery electrolyte is obtained by in-situ polymerization of the semi-solid battery electrolyte precursor described above.

Since the semi-solid battery electrolyte precursor described above includes the first polymer monomer with the above-mentioned acrylic acid structure or acrylate structure and the second polymer monomer with the fluorine-containing unsaturated structure, the semi-solid battery electrolyte formed by the semi-solid battery electrolyte precursor via the in-situ polymerization contains the copolymer that improves the stability of the electrode/electrolyte interface. Even if the monomer residues exist, the stable SEI film can be formed during the subsequent film-forming stage, optimizing the electrode/electrolyte interface. Additionally, the semi-solid battery electrolyte precursor is compatible with a wide range of monomer types, allowing for the design of different electrolyte systems based on the battery requirements. The subsequent preparation process for semi-solid batteries is simple, significantly reducing the DCIR while improving production efficiency of the semi-solid battery, making the semi-solid battery highly feasible for large-scale applications.

**In** some embodiments of the present disclosure, a preparation method of a semi-solid battery is provided. The preparation method includes injecting the semi-solid battery electrolyte precursor as described above into a cell for in-situ polymerization.

**The** preparation method enables the in-situ polymerization of the first polymer monomer with the acrylic acid structure or the acrylate structure and the second polymer monomer with the fluorine-containing unsaturated structure under an action of the initiator. The resulting copolymer improves the stability of the electrode/electrolyte interface. Even if the monomer residues exist, a highly stable SEI film during the subsequent film-forming stage can be formed, optimizing the electrode/electrolyte interface, significantly reducing the battery DCIR, and improving battery cycling performance. Compared to methods like two-step injection, the preparation method in the present disclosure does not add additional steps, reducing time costs and improving efficiency, making the preparation method highly feasible for large-scale applications.

**In** some embodiments of the present disclosure, after injecting the semi-solid battery electrolyte precursor into the cell, the in-situ polymerization is performed at 50°C-70°C for 6 h-12 h, resulting in an electrolyte containing a fluorine-containing copolymer and exhibiting excellent performance.

**In** some embodiments of the present disclosure, before the in-situ polymerization, the semi-solid battery electrolyte precursor is injected into the cell, then the cell is vacuum-sealed, and left to stand for 24 h-50 h to ensure the electrolyte fully infiltrates electrodes. Particularly, the standing is performed at 15°C-35°C or room temperature.

**In** some embodiments of the present disclosure, the preparation method includes assembling a dry cell from a cathode sheet, an anode sheet, and a separator. In the present disclosure, types and preparation methods of the cathode sheet, the anode sheet, and the separator are not limited and can be selected from the related art by those skilled in the art.

**In** some embodiments of the present disclosure, a cathode material of the cathode sheet includes at least one selected from the group consisting of lithium cobalt oxide, a ternary material, lithium iron phosphate, a lithium-rich manganese-based material, and spinel-type lithium manganese oxide.

**In** some embodiments of the present disclosure, an anode material of the anode sheet includes at least one selected from the group consisting of graphite, amorphous carbon, lithium titanate, a SiOx/C composite, and a Sn-based composite.

**In** some embodiments of the present disclosure, the preparation method of the semi-solid battery includes the following operations. Firstly, the electrolyte precursor is prepared by mixing the lithium salt, the solvent, the additive, the first polymer monomer, the second polymer monomer, and the initiator. Secondly, the dry cell is prepared by assembling the cathode sheet, the anode sheet, and the separator into a casing. Thirdly, the dry cell is injected with the prepared electrolyte, vacuum-sealed, and stands at room temperature for 24 h-50 h. Fourthly, the in-situ polymerization is performed by placing the injected cell in an oven at 50°C-70°C for 6 h-12 h. Fifthly, formation at 40°C-50°C and capacity grading at room temperature are performed on the cell after the in-situ polymerization to obtain the semi-solid battery. Particularly, a formation temperature is 45°C.

In some embodiments of the present disclosure, a semi-solid battery is provided. The semi-solid battery is prepared by the aforementioned preparation method or includes the aforementioned semi-solid battery electrolyte.

The semi-solid battery prepared by the aforementioned preparation method enables the in-situ polymerization of the first polymer monomer with the acrylic acid structure or the acrylate structure and the second polymer monomer with the fluorine-containing unsaturated structure under the action of the initiator. The resulting semi-solid electrolyte containing the copolymer improves the stability of the electrode/electrolyte interface. Even if the monomer residues exist, a highly stable SEI film can be formed during the subsequent film-forming stage, optimizing the electrode/electrolyte interface, significantly reducing the battery DCIR, and noticeably improving the battery cycling performance.

The following examples and comparative examples further illustrate the beneficial effects achievable by the present disclosure.

### Example 1

### Preparation of Electrolyte Precursor:

7.5 g of pentaerythritol tetraacrylate, 2.5 g of 2,2,2-trifluoroethyl methacrylate, and 0.1 g of azobisisobutyronitrile were added to 490 g of electrolyte to prepare an electrolyte precursor.

The electrolyte is consisted of a lithium salt, an organic solvent, and an additive. The lithium salt was 1 M LiPF6, the organic solvent was a mixture of ethylene carbonate (EC) and ethyl methyl carbonate (EMC) in a volume ratio of 3:7, and the additive was 3 wt% vinylene carbonate (VC) and 1 wt% fluoroethylene carbonate (FEC).

### Preparation of Prismatic Dry Cell:

96 wt% nickel-cobalt-manganese (NCM) ternary cathode active material, 2.8 wt% conductive agent, and 1.2 wt% binder were mixed uniformly with a solvent to obtain a cathode slurry. The cathode slurry was coated evenly on both sides of a cathode current collector, followed by drying, rolling, and cutting to produce a cathode sheet.

96 wt% graphite anode active material, 2 wt% conductive agent, and 2 wt% binder were mixed uniformly with a solvent to obtain an anode slurry. The anode slurry was coated evenly on both sides of an anode current collector, followed by drying and rolling to produce an anode sheet.

The cathode sheet, the anode sheet, and a separator were assembled in a casing to form a prismatic dry cell.

Electrolyte Injection and Sealing: The prismatic dry cell was injected with the prepared electrolyte precursor, then vacuum-sealed, and left to stand at room temperature for 48 h.

In-Situ Polymerization: The injected cell was placed in an oven at 60°C for 6 h.

Formation and Capacity Grading: Formation was performed on the cell after the in-situ polymerization at 45°C, followed by capacity grading at room temperature to produce the prismatic semi-solid battery.

### Example 2

The procedure was the same as in Example 1, except that methyl methacrylate was used instead of pentaerythritol tetraacrylate in the preparation of the electrolyte precursor.

### Example 3

The procedure was the same as in Example 1, except that methacrylic acid was used instead of pentaerythritol tetraacrylate in the preparation of the electrolyte precursor.

### Example 4

The procedure was the same as in Example 1, except that 2,2,3,3,3-pentafluoropropyl methacrylate was used instead of 2,2,2-trifluoroethyl methacrylate in the preparation of the electrolyte precursor.

### Example 5

The procedure was the same as in Example 1, except that 7.5 g of 2,2,2-trifluoroethyl methacrylate was added in the preparation of the electrolyte precursor.

### Example 6

The procedure was the same as in Example 1, except that 10 g of 2,2,2-trifluoroethyl methacrylate was added in the preparation of the electrolyte precursor.

### Example 7

The procedure was the same as in Example 1, except that 1.5 g of 2,2,2-trifluoroethyl methacrylate was added in the preparation of the electrolyte precursor.

### Example 8

The procedure was the same as in Example 1, except that 2.5 g of pentaerythritol tetraacrylate was added in the preparation of the electrolyte precursor.

### Example 9

The procedure was the same as in Example 1, except that 25 g of pentaerythritol tetraacrylate, 10 g of 2,2,2-trifluoroethyl methacrylate, and 0.7 g of initiator were added in the preparation of the electrolyte precursor.

### Example 10

The procedure was the same as in Example 1, except that the in-situ polymerization was performed at 70°C for 5 h.

### Comparative Example 1

The procedure was the same as in Example 1, except that 10 g of pentaerythritol tetraacrylate was added without 2,2,2-trifluoroethyl methacrylate in the preparation of the electrolyte precursor.

### Comparative Example 2

The procedure was the same as in Example 1, except that 10 g of 2,2,2-trifluoroethyl methacrylate was added without pentaerythritol tetraacrylate in the preparation of the electrolyte precursor.

### Comparative Example 3

The procedure was the same as in Example 1, except that fluoroethylene carbonate (FEC) was used instead of pentaerythritol tetraacrylate in the preparation of the electrolyte precursor.

### Comparative Example 4

The procedure was the same as in Example 1, except that vinylethylene carbonate (VEC) was used instead of pentaerythritol tetraacrylate in the preparation of the electrolyte precursor.

### Comparative Example 5

The procedure was the same as in Example 1, except that N,N-dimethylacrylamide was used instead of pentaerythritol tetraacrylate in the preparation of the electrolyte precursor.

The prepared prismatic semi-solid batteries prepared in the above examples and comparative examples were tested as follows, with results listed in Table 1.

DCIR Measurement: At 50% state of charge (SOC), the battery was charged/discharged at a constant current of 1C for 10 s, with voltage changes (ΔU) recorded at 1 s intervals during charging/discharging. DCIR was calculated as ΔU/I.

Electrochemical Performance: At room temperature, the battery was charged to 4.2 V at 1C constant current/constant voltage (CC/CV) with a 0.05C cutoff, rested for 10 min, discharged to 2.75 V at 1C, rested for another 10 min, and cycled 600 times to determine capacity retention.

**Table 1**

| | DCIR (Ω) | Capacity Retention (%) |
|---|---|---|
| Ex. 1 | 41.3 | 98.45 |
| Ex. 2 | 50.6 | 96.98 |
| Ex. 3 | 53.7 | 96.53 |
| Ex. 4 | 48.9 | 97.09 |
| Ex. 5 | 43.8 | 97.86 |
| Ex. 6 | 46.3 | 97.52 |
| Ex. 7 | 44.3 | 97.65 |
| Ex. 8 | 47.9 | 97.22 |
| Ex. 9 | 56.3 | 95.93 |
| Ex. 10 | 42.1 | 98.21 |
| Comp. Ex. 1 | 52.8 | 96.76 |
| Comp. Ex. 2 | 55.4 | 96.21 |
| Comp. Ex. 3 | 59.7 | 95.14 |
| Comp. Ex. 4 | 58.3 | 95.76 |
| Comp. Ex. 5 | 60.9 | 94.79 |

As demonstrated in the above description, the embodiments of the present disclosure achieve the following technical effects. The semi-solid battery electrolyte precursor includes the first polymer monomer with the acrylic acid structure or the acrylate structure and the second polymer monomer with the fluorine-containing unsaturated structure. The resulting copolymer can improve the stability of the electrode/electrolyte interface. Even if the monomer residues exist, a highly stable SEI film can be formed during the subsequent film-forming stage, optimizing the electrode/electrolyte interface. Additionally, the semi-solid battery electrolyte precursor is compatible with a wide range of monomer types, allowing for the design of different electrolyte systems based on the battery requirements. The subsequent preparation process for semi-solid batteries is simple, significantly reducing the DCIR while improving the battery production efficiency, making the semi-solid battery highly feasible for large-scale applications.

## Claims

1. A semi-solid battery electrolyte precursor, **characterized by** comprising: a first polymer monomer, a second polymer monomer, and an initiator;
wherein the first polymer monomer is an acrylic acid monomer or an acrylate monomer;
the second polymer monomer is a fluorine-containing unsaturated monomer.

2. The semi-solid battery electrolyte precursor as claimed in claim 1, wherein the first polymer monomer comprises at least one selected from the group consisting of acrylic acid, methacrylic acid, methyl methacrylate, butyl acrylate, 1,3-butanediol diacrylate, pentaerythritol tetraacrylate, ethoxylated trimethylolpropane triacrylate, trimethylolpropane trimethacrylate, and pentaerythritol triacrylate;
the second polymer monomer comprises at least one selected from the group consisting of 2,2,2-trifluoroethyl methacrylate, 2,2,3,3-tetrafluoropropyl methacrylate, 2,2,3,3,3-pentafluoropropyl methacrylate, and 1,1,1,3,3,3-hexafluoroisopropyl methacrylate;
the initiator comprises at least one selected from the group consisting of azobisisobutyronitrile, 2,2'-azobis-(2,4-dimethylvaleronitrile), benzoyl, dicumyl peroxide, dibenzoyl peroxide, potassium persulfate, and ammonium persulfate.

3. The semi-solid battery electrolyte precursor as claimed in any one of claims 1-2, wherein the first polymer monomer comprises at least one selected from the group consisting of methyl methacrylate, butyl acrylate, 1,3-butanediol diacrylate, pentaerythritol tetraacrylate, ethoxylated trimethylolpropane triacrylate, trimethylolpropane trimethacrylate, and pentaerythritol triacrylate.

4. The semi-solid battery electrolyte precursor as claimed in any of claims 1-3, wherein a mass ratio of the first polymer monomer to the second polymer monomer is in a range of 3:1-1:1.

5. The semi-solid battery electrolyte precursor as claimed in any one of claims 1-4, wherein a mass ratio of the first polymer monomer to the second polymer monomer is in a range of 3:1-2:1.

6. The semi-solid battery electrolyte precursor as claimed in any one of claims 1-5, wherein a mass of the initiator ranges from 0.5 wt% to 2 wt% of a total mass of the first polymer monomer and the second polymer monomer.

7. The semi-solid battery electrolyte precursor as claimed in any one of claims 1-6, further comprising a lithium salt and a solvent;
the lithium salt comprises at least one selected from the group consisting of lithium hexafluorophosphate, lithium tetrafluoroborate, lithium trifluoromethanesulfonate, lithium bis(trifluoromethanesulfonyl)imide, lithium bis(fluorosulfonyl)imide, lithium difluoro(oxalato)borate, lithium perchlorate, and lithium bis(oxalato)borate;
the solvent comprises at least one selected from the group consisting of propylene carbonate, ethylene carbonate, ethyl methyl carbonate, dimethyl carbonate, diethyl carbonate, dimethoxyethane, and ethyl propionate.

8. The semi-solid battery electrolyte precursor as claimed in any one of claims 1-7, wherein a mass of the first polymer monomer ranges from 0.5 wt% to 5 wt% of a total mass of the semi-solid battery electrolyte precursor, and a mass of the second polymer monomer ranges from 0.5 wt% to 2.5 wt% of the total mass of the semi-solid battery electrolyte precursor.

9. The semi-solid battery electrolyte precursor as claimed in any one of claims 1-8, wherein a total mass of the first polymer monomer and the second polymer monomer ranges from 1.5% to 3% of a total mass of the semi-solid battery electrolyte precursor.

10. A semi-solid battery electrolyte, **characterized in that** the semi-solid battery electrolyte is obtained by in-situ polymerization of the semi-solid battery electrolyte precursor as claimed in any one of claims 1-9.

11. A preparation method of a semi-solid battery, **characterized by** comprising: injecting the semi-solid battery electrolyte precursor as claimed in any one of claims 1-9 into a cell for in-situ polymerization.

12. The preparation method of the semi-solid battery as claimed in claim 11, wherein the in-situ polymerization is performed at 50°C-70°C for 6 h-12 h.

13. The preparation method of the semi-solid battery as claimed in any one of claims 11-12, wherein before the in-situ polymerization, the cell is injected with the semi-solid battery electrolyte precursor, vacuum-sealed, and left to stand for 24 h-50 h.

14. The preparation method of the semi-solid battery as claimed in any one of claims 11-13, further comprising: assembling a dry cell from a cathode sheet, an anode sheet, and a separator;
a cathode material of the cathode sheet comprises at least one selected from the group consisting of lithium cobalt oxide, a ternary material, lithium iron phosphate, a lithium-rich manganese-based material, and spinel-type lithium manganese oxide;
an anode material of the anode sheet comprises at least one selected from the group consisting of graphite, amorphous carbon, lithium titanate, a SiOx/C composite, and a Sn-based composite.

15. A semi-solid battery, **characterized in that** the semi-solid battery is prepared by the preparation method of the semi-solid battery as claimed in any one of claims 11-14 or comprising the semi-solid battery electrolyte as claimed in claim 10.
